# EUROPÄISCHE PATENTSCHRIFT

(11) **EP 2 480 807 B1**
(45) Veröffentlichungstag und Bekanntmachung des Hinweises auf die Patenterteilung: **16.10.2013**
(21) Anmeldenummer: 10742801.3
(22) Anmeldetag: 03.08.2010
(51) Int. Cl.: F16K 17/18, F16K 1/44

(54) **RÜCKSCHLAGVENTIL MIT ZWEI SCHLIESSKÖRPERN**
PRESSURE RELIEF VALVE WITH TWO CLOSING MEMBERS
CLAPET ANTI-RETOUR AVEC DEUX CORPS DE FERMETURE

(30) Priorität: 22.09.2009 DE 102009029670
(43) Veröffentlichungstag der Anmeldung: 01.08.2012
(73) Patentinhaber: Robert Bosch GmbH, 70442 Stuttgart (DE)
(72) Erfinder: KNIS, Wolfram, 73529 Schwaebisch Gmuend (DE); EHRHARDT, Uwe, 73760 Ostfildern (DE); MIEHLE, Tilman, 71334 Waiblingen (DE)
(86) Internationale Anmeldenummer: PCT/EP2010/061253
(87) Internationale Veröffentlichungsnummer: WO 2011/035966

(56) Entgegenhaltungen:
- EP-B1- 1 792 111
- FR-A- 1 327 130
- NL-C- 69 631
- NL-C- 103 428

## Beschreibung

### Stand der Technik

Die Erfindung betrifft ein Rückschlagventil mit einem ersten Schließkörper und einem zugehörigen ersten Ventilsitz sowie einem zweiten Schließkörper und einem zugehörigen zweiten Ventilsitz.

Ein Rückschlagventil der oben genannten Art ist aus DE 103 39 250 A1 bekannt und wird dort insbesondere in einem Kraftstoffeinspritzsystem verbaut, um z.B. zum einen eine Verbindung in Richtung einer Leckölleitung zu öffnen und zum anderen einen Niederdruckspeicher zu füllen. Die mit den beiden Schließkörpern und Ventilsitzen realisierten Unterventile dieses Rückschlagventils sollen bei unterschiedlichen Leitungsdrücken öffnen bzw. schließen. Dabei ist unter anderem der zweite Ventilsitz an dem ersten Schließkörper angeordnet.

Desweiteren sind aus EP 1 792 111 A1, aus NL 69631 C und aus FR 1 327 130 A jeweils zweistufige Ventile bekannt, wobei jeweils beide Ventile in gleicher Richtung öffnen und beide Ventile in gleicher Richtung schließen.
Desweiteren ist aus NL 103 428 C ein zweistufiges Ventil bekannt, bei dem die beiden Ventilsitze gegenüberliegend an einem zylindrischen Ausschnitt eines Bauteils angeordnet sind.

### Offenbarung der Erfindung

Gemäß der Erfindung ist ein Rückschlagventil, insbesondere für eine Kraftstoffeinspritzvorrichtung bzw. ein Kraftstoffeinspritzsystem, wie etwa ein Common Rail System, wie in Anspruch 1 offenbart.

Erfindungsgemäß ist ein Rückschlagventil mit zwei Anschlüssen geschaffen, welche wechselweise als Zu- und Ablauf dienen. Abhängig von den angelegten Druckverhältnissen schalten in dem Rückschlagventil zwei (Unter-)Ventile, welche mit einem ersten Ventilsitz und einem zugehörigen ersten Schließkörper sowie einem zweiten Ventilsitz und einem zugehörigen zweiten Schließkörper gebildet sind. Die Ventile befinden sich in demselben hydraulischen Raum, wobei die Ventilsitze beider Ventile an einem gemeinsamen, einem für diese beiden Ventilsitze einzigen bzw. ein und demselben Ventilsitzbauteil ausgebildet sind und der Ventilsitz des einen Ventils den Ventilsitz des anderen Ventils außen umgibt. Auf diese Weise ist eine parallele Anordnung von Ventilen geschaffen, die räumlich ineinander geschaltet sind. Ein Vorteil dieser Anordnung liegt darin, dass der erforderliche Bauraumbedarf minimal ist. Über die Geometrie der Ventilsitze und der Schließkörper sowie die Federkräfte bzw. Federraten zugehöriger Federelemente lassen sich die Druckbereiche und Öffnungscharakteristiken der jeweiligen Durchströmungen einstellen. Erfindungsgemäß sind die Ventile auf engstem Bauraum parallel geschaltet und schließen bzw. öffnen in entgegengesetzte Richtungen, ohne dass es dazu einer Fremdbetätigung bedürfen würde. Die Dichtfunktion der jeweils gesperrten Durchflussrichtung wird erfindungsgemäß hydraulisch unterstützt. Der Durchlass am jeweiligen Schließkörper wird "dichtgedrückt". Darüber hinaus beeinflussen sich bei dem erfindungsgemäßen Rückschlagventil die Federkräfte der beiden Schließkörper nicht gegenseitig, so dass auf einfache, kostengünstige Weise eine stets den Anforderungen entsprechende Schließkraft für beide Schließkörper gewährleistet werden kann. Ferner ergeben sich bei dem erfindungsgemäßen Rückschlagventil für beide Ventilbewegungen recht kleine bewegte Massen, was sich positiv auf das hydrodynamische Verhalten der einzelnen Ventile auswirkt.

Bei einer ersten vorteilhaften Weiterbildung des erfindungsgemäßen Rückschlagventils ist der erste Ventilsitz als ein zentrale Öffnung und der zweite Ventilsitz mit mehreren Öffnungen gestaltet, welche radial außen umfänglich um den ersten Ventilsitz herum angeordnet sind.

Mit dieser Weiterbildung ist eine auch bei hohen Drücken formstabile Ventilsitzanordnung geschaffen, welche mit der zugleich erreichten Funktionsintegration darüber hinaus besonders wenig Bauraum beansprucht.

Bei einer zweiten vorteilhaften Weiterbildung des erfindungsgemäßen Rückschlagventils ist der zweite Schließkörper ringförmig gestaltet.

Der derartige Schließkörper kann mittels einer Schraubenfeder auf einfache Weise gegen den zugehörigen Ventilsitz vorgespannt werden und dichtet dort dennoch im notwendigen Umfang sehr gut ab. Er realisiert in vorteilhafter Weise die oben bereits genannte Verschachtelung der beiden Ventile.

Bei einer dritten vorteilhaften Weiterbildung des erfindungsgemäßen Rückschlagventils sind der erste Schließkörper mit einem ersten Federelement und der zweite Schließkörper mit einem zweiten Federelement in einer axialen Richtung gegen die zugehörigen Ventilsitze gedrängt und die Federelemente sind sich in dieser axialen Richtung überlappend gestaltet.

Auch diese vorteilhafte Weiterbildung führt zu einer weiteren Bauraumverkleinerung, welche darüber hinaus eine strömungstechnisch günstige Grundlage für eine nachfolgend erläuterte vorteilhafte Anordnung eines patronenförmigen Filterelements bildet.

Bei einer vierten vorteilhaften Weiterbildung des erfindungsgemäßen Rückschlagventils ist zwei Filterelemente bzw. Filtergewebe vorgesehen, welche strömungstechnisch mit dem ersten bzw. dem zweiten Ventilsitz in Reihe geschaltet sind.

Die beiden Filterelemente entwickelt in beide Strömungsrichtungen jeweils vor dem zugehörigen Ventilsitz mit dessen Schließkörper filternde Wirkung und ermöglichen es dadurch, dass beide derart geschützten Ventile nicht von Partikeln verunreinigt werden können. Die Ventile befinden sich also zwischen den Filterelementen in einem beidseits durch Filter geschützten Raum.

Gemäß der Erfindung ist ferner ein Rückschlagventil, insbesondere für eine Kraftstoffeinspritzvorrichtung bzw. ein Kraftstoffeinspritzsystem, wie etwa ein Common Rail System, geschaffen, mit einem ersten Schließkörper und einem zugeordneten ersten Filtergewebe sowie einem zweiten Schließkörper und einem zugeordneten zweiten Filtergewebe, bei dem das erste und das zweite Filtergewebe in einem gemeinsamen Filterbauteil umspritzt sind.

Die beiden Filtergewebe ermöglichen eine gezielte Filtration von zu reinigendem Fluid jeweils in Strömungsrichtung unmittelbar vor dem zugeordneten Schließkörper bzw. Ventilsitz und stellen somit sicher, dass die Schließkörper mit ihren zugehörigen Ventilsitzen vor Verunreinigung weitestgehend geschützt sind. Zugleich ist das dazu geschaffen Filterbauteil als multifunktionales Bauteil besonders kostengünstig herzustellen und besonders einfach zu montieren. In das Filterbauteil ist besonders vorteilhaft ferner auch die obige Funktion eines Ventilsitzbauteils mit den beiden zugehörigen Ventilsitzen integriert.

Bei einer fünften vorteilhaften Weiterbildung des erfindungsgemäßen Rückschlagventils ist das Filterbauteil mit einer hohlzylindrischen Filterpatrone gestaltet.

Die derartige Ausgestaltung des Filterbauteils ermöglicht vorteilhaft eine bauraumsparende Anordnung der Ventilsitze zumindest abschnittsweise innerhalb der Filterpatrone. Die Filterpatrone ist bevorzugt an einem ihrer Stirnseiten mit einer Prallplatte verschlossen, genen die das einströmende Fluid strömt. Mit der Prallplatte wird dadurch eine Strömungsumlenkung des zu filternden Fluids erreicht. Die Anströmung des Filterbauteils erfolgt also nicht über einen direkt auf die zugehörige Filterfläche ausgerichteten Strahl, sondern die Strömung wird zunächst umgelenkt. Dadurch wird vermieden, dass sich langgestreckte Partikel innerhalb des Fluids senkrecht zur Filterfläche ausrichten. Die Partikel werden erfindungsgemäß vielmehr zusätzlich im Fluidstrom verwirbelt. Alternativ oder zusätzlich ist vorteilhaft an dem Filterbauteil eine Tasche ausgebildet, welche eine Art Sackgasse zum Aufnehmen von Partikeln aus dem Fluidstrom darstellt. Die Partikel werden dann in der Tasche gesammelt und verstopfen nicht das Filterbauteil.

Bei einer sechsten vorteilhaften Weiterbildung des erfindungsgemäßen Rückschlagventils sind die Filtergewebe mit einem aus zwei Fäden gewebten Geflecht gestaltet, von denen ein Faden einen erheblich größeren Durchmesser aufweist, als der andere.

Gemäß dieser Weiterbildung sind also der Kett- und der Schussfaden des zugehörigen Gewebes stark unterschiedlich dick gestaltet. Es ergeben sich an dem Geflecht auf diese Weise als Öffnungsflächen des Gewebes dreieckförmige Filtermaschen, die nicht in der selben Ebene liegen, wie das Filtergewebe selbst, sondern schräg dazu ausgerichtet sind. Es wird innerhalb des Gewebes eine dreidimensionale Form (ein "3D-Filter") ausgebildet, innerhalb der die Öffnungsflächen schräg zur Hauptebene des Gewebes ausgerichtet sind. Die schräge Ausrichtung führt zu einer zusätzlichen Strömungsumlenkung, wodurch lange, dünne Partikel besser abgefangen werden.

Bei einer siebten vorteilhaften Weiterbildung des erfindungsgemäßen Rückschlagventils haltert das Ventilsitzbauteil zugleich die Filtergewebe .

Mit dieser Weiterbildung sind vorteilhaft die Dichtfunktionen für beide hydraulischen Wirkrichtungen und die Filterfunktion in einem einzigen Bauteil integriert. Dadurch entfallen getrennte Bauteile für die obigen Funktionen. Das hat einen Kostenvorteil und eine Bauteilreduktion im Vergleich zu bisher bekannten Lösungen zur Folge. Darüber hinaus ist es von Vorteil, wenn mit Haltefunktionen von Bauteilen zugleich dichtende Funktionen kombiniert sind. So ist vorteilhaft ein Deckel dicht mit einem zugehörigen Gehäuse verschweißt, so dass dieses nach außen abgedichtet ist die zugehörigen Ventilbauteile zugleich zusammengehalten sind. Ferner ist vorteilhaft das einzige Ventilbauteil, welches vorteilhaft zugleich die Filtergewebe haltert, mit einem Dichtsitz im zugehörigen Gehäuse in Position gehalten. Die Verbindungen von Bauteilen mit Dichtfunktion sind besonders bevorzugt mittels einer Laserschweißung hergestellt, da damit beide Funktionen, die Halte- und die Dichtfunktion, integriert ausgeführt werden und sonst erforderliche zusätzliche Dicht- oder Halteelemente entfallen können.

Darüber hinaus ist es erfindungsgemäß von Vorteil, wenn bei einem Rückschlagventil, insbesondere der oben genannten Gestaltung, mindestens ein Ventilsitz aus einem mit Aramidfasern verstärkten Kunststoff gestaltet ist.

Die Verstärkung eines Ventilsitzes mit Aramidfasern bzw. Kevlar führt im Vergleich zu einer Verstärkung mit Glasfasern zu einer verbesserten Eigenschaft dahingehend, dass sich diese Füllfasern watteartig "verhaken". Glasfasern haben dieses "Verhakneigung" nicht. Mit dem Verhaken der Füllfasern wird ein Verzug nach dem Spritzvorgang des Kunststoffs in allen Raumrichtungen homogenisiert. Glasfasern haben hingegen sehr unterschiedliche Schwindung in Faserrichtung und 90° zur Faserrichtung. Durch die erfindungsgemäß verwendeten Aramidfasern wird hingegen ein gleichmäßiges Schwindungsverhalten und eine hohe Oberflächengüte des hergestellten Kunststoffteils erreicht. Dies hat Vorteile für die Funktion dieses Teiles als hydraulischer Dichtsitz. Seine Dichtungsgeometrie ist näher an der "idealen" Form. Unrundheiten oder Unebenheiten können reduziert werden. Darüber hinaus ist erfindungsgemäß vorteilhaft die Kontaktfläche des Dichtsitzes im Vergleich zu bisher bekannten Lösungen vergrößert ausgebildet. Dies ist insbesondere durch einen im Durchmesser besonders großen Ventilkörper realisiert. Dies gewährleistet eine bessere Dichtheit bei Unregelmäßigkeiten im zugehörigen Ventilsitz sowie beim Eintrag von Partikeln während der Herstellung oder während des Betriebs. Darüber hinaus ist vorteilhaft der Ventilkörper aus einem Elastomer-Werkstoff hergestellt. Dessen Geometrie passt sich dann besser an Abweichungen des zugehörigen Dichtsitzes an.

Ferner ist es erfindungsgemäß von Vorteil, wenn bei einem Rückschlagventil, insbesondere der oben genannten Gestaltung, zwei Bauteile mittels eines materialaufschmelzenden Verfahrens miteinander verbunden sind, von denen das erste Bauteil mit einem ersten Füllstoff, insbesondere Aramidfasern, und das zweite Bauteil mit einem zweiten, andersartigen Füllstoff, insbesondere Glasfasern, gestaltet ist.

Vorteilhaft werden also zwei Kunststoffe mit unterschiedlichen Füllstoffen mit einander verschmolzen bzw. verschweißt. So lassen sich die Vorteile beider Füllstoffe (insbesondere Aramidfasern und Glasfasern) zu einer Einheit kombinieren. Die Verbindung wird besonders bevorzugt mittels Laserschweißen ausgebildet. Dabei lassen sich die Schweißparameter an die Füllstoffe derart anpassen, dass eine homogene Verbindung der Grundmatrix vorhanden ist. Alternativ kann sie mittels Reibschweißen, Ultraschallschweißen, Löten oder Kleben ausgebildet werden.

Nachfolgend wird ein Ausführungsbeispiel der erfindungsgemäßen Lösung anhand der beigefügten schematischen Zeichnungen erläutert. Es zeigt:
- Fig. 1: eine Explosionsdarstellung eines Ausführungsbeispiels eines erfindungsgemäßen Rückschlagventils,
- Fig. 2: einen Längsschnitt des Rückschlagventils gemäß Fig. 1,
- Fig. 3: eine perspektivische Schnittansicht eines Filtergewebes des Rückschlagventils gemäß Fig. 1,
- Fig. 4: einen Längsschnitt eines Ventilsitzes mit einem Elastomer-Schließkörper des Rückschlagventils gemäß Fig. 1,
- Fig. 5: einen Längsschnitt eines Ventilsitzes mit einem Stahl-Schließkörper des Rückschlagventils gemäß Fig. 1 und
- Fig. 6: eine Schaltungsdarstellung eines Kraftstoffeinspritzsystems mit einem Rückschlagventil gemäß Fig. 1.

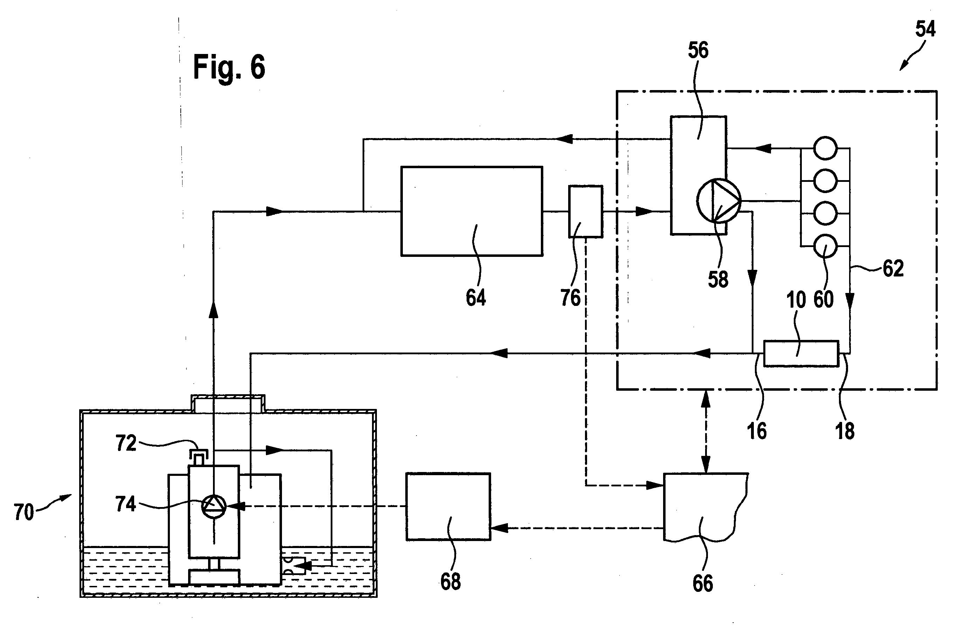

In den Fig. ist insbesondere ein Rückschlagventil 10 für den Einbau in einem in Fig. 6 dargestellten Kraftstoffeinspritzsystem, vorliegend einem Common Rail System, veranschaulicht. Das Rückschlagventil 10 umfasst ein becherförmiges Gehäuse 12, das mit einem Deckel 14 fluiddicht verschlossen ist.

Das Gehäuse 12 ist zylindrisch gestaltet, mit einer im Querschnitt kreisrunden Wandung 13 und einer zugehörigen Deckfläche 15. An der Deckfläche 15 des derart becherförmigen Gehäuses 12 befindet sich zentral ein hohlzylindrischer Anschlussstutzen 16. Auch an der Außenseite des Deckels 14 befindet sich zentral ein hohlzylindrischer Anschlussstutzen 18. An der Innenseite des Deckels 14 ist parallel zu diesem eine Prallplatte 20 ausgebildet.

In das Gehäuse 12 ist ein Einsatz 22 passgenau eingesetzt, welches hier auch als Ventilsitzbauteil bezeichnet wird. Der Einsatz 22 ist kreiszylindrisch ausgebildet, wobei er innen im Wesentlichen hohl ist. Die Prallplatte 20 verschließt dabei das sonst offene, dem Deckel 14 zugewandte Ende des Einsatzes 22. Die Verbindung zwischen Deckel 14 und Einsatz 22 ist mittels Laserschweißen hergestellt und abgedichtet. Dabei ist der Deckel 14 zuvor mit einem mit Glasfasern verstärkten Kunststoff und der Einsatz 22 mit einem mit Aramidfasern verstärkten Kunststoff spritzgegossen worden.

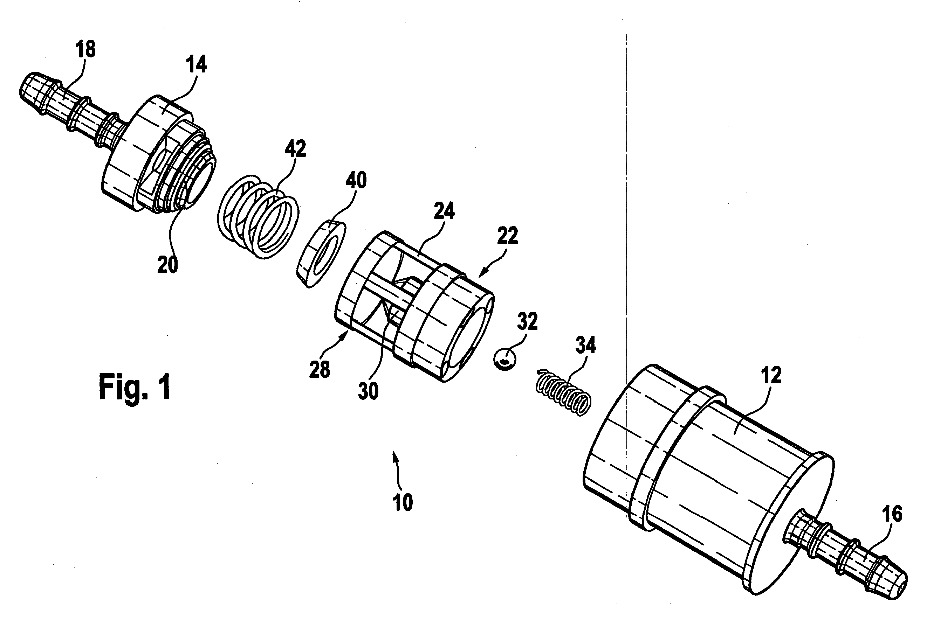

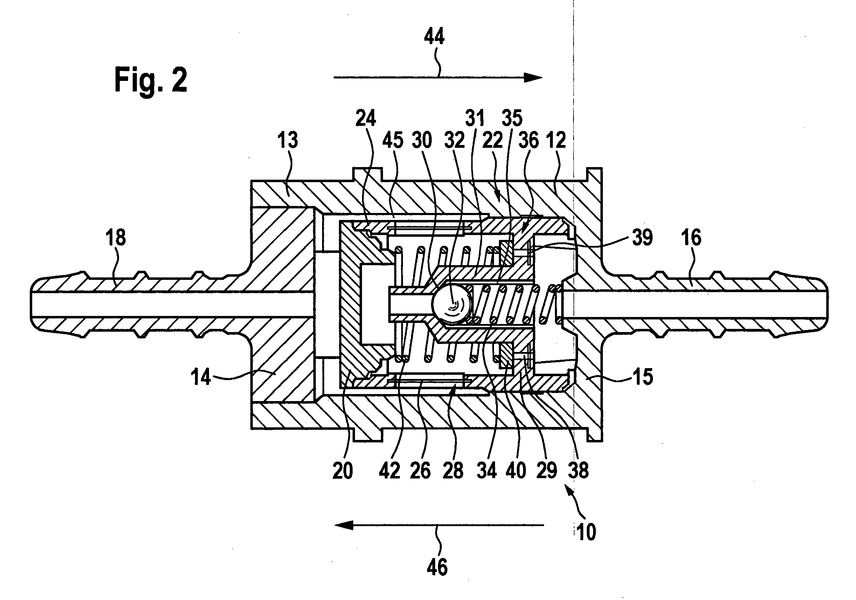

In der Mantelfläche des Einsatzes 22 befinden sich mehrere fensterartige Aussparungen, welche mit der verbleibenden Mantelfläche einen Käfig 24 bilden. In den fensterartigen Aussparungen des Einsatzes 22 ist ein Filtergewebe 26 angeordnet (dieses ist in Fig. 1 zur besseren Veranschaulichung weggelassen), so dass diese Aussparungen bzw. Fenster von dem Filtergewebe 26 überspannt sind (siehe Fig. 2). Das Filtergewebe 26 ist als Filterelement bei der Herstellung des Einsatzes 22 in einer zugehörigen Spritzgussform platziert und mittels Spritzgießen in das Bauteil eingefügt bzw. eingegossen worden. Es ist so eine formschlüssige Verbindung zwischen dem Material des Einsatzes 22 und dem Filtergewebe 26 hergestellt worden. Der Käfig 24 bildet so zusammen mit dem Filtergewebe 26 ein Filterbauteil 28.

Im Inneren des Einsatzes 22 befindet sich an dem vom Deckel 14 abgewandten Endbereich ein scheibenförmiger Abschnitt 29, in dessen Mitte ein hohlzylindrischer Abschnitt 31 anschließt. In dem hohlzylindrischen Abschnitt 31 ist ein erster Ventilsitz 30 zentral ausgebildet. Der Ventilsitz 30 ist trichterförmig und dabei kreisrund. Er begrenzt zusammen mit dem hohlzylindrischen Abschnitt 31 gegenüber der Deckfläche 15 des Gehäuses 12 einen Hohlraum, in dem sich ein kugelförmiger Schließkörper 32 befindet. Der Schließkörper 32 ist mit einer Schraubenfeder 34 als Federelement gegen den Ventilsitz 30 gedrängt. Die Schraubenfeder 34 stützt sich dabei mit einem ihrer Enden an der Deckfläche 15 des Gehäuses 12 ab. Die Schraubenfeder 34 ist in dieser Lage vorgespannt und zusammen mit dem Schließkörper 32 mittels Führungsrippen 35 im Inneren des Hohlraums geführt.

An dem Einsatz 22 ist ferner ein zweiter Ventilsitz 36 ausgebildet, der den ersten Ventilsitz 30 an dessen Außenseite, außerhalb des hohlzylindrischen Abschnitts 31 umgibt. Dieser zweite Ventilsitz 36 ist mit mehreren Kanälen 38 gebildet, die in regelmäßigen Abständen um den Ventilsitz 30 herum angeordnet sind. In jedem der Kanäle 38 erstreckt sich quergerichtet als Filterelement ein Filtergewebe 39.

Dem Ventilsitz 36 ist ein ringförmiger Schließkörper 40 zugeordnet, der sich in Axialrichtung des Rückschlagventils 10 und damit des becherförmigen Gehäuses 12 entlang des hohlzylindrischen Abschnitts des Einsatzes 22 bewegen kann. Eine zweite Schraubenfeder 42 drückt als Federelement mit einem ihrer Enden gegen den Schließkörper 40 und stützt sich dabei an der Prallplatte 20 des Deckels 14 ab. Sie ist in dieser Lage ebenfalls vorgespannt.

Über die Anschlussstutzen 16 und 18 kann das Rückschlagventil 10 abwechselnd von der einen oder eben der anderen Seite mit Fluid, vorliegend mit Kraftstoff, beströmt werden. Das Beströmen durch den Anschlussstutzen 18 ist der normale Betriebszustand für das Rückschlagventil 10. Das Beströmen durch den Anschlussstutzen 16 dient zum Befüllen des dann in Strömungsrichtung nachgeordneten Kraftstoffeinspritzsystems bei erster Inbetriebnahme und zum jeweiligen Aufbauen eines Gegendrucks in diesem nachgeordneten Kraftstoffeinspritzsystem während des Betriebs.

Strömt das Fluid im normalen Betriebszustand in der Richtung eines in Fig. 2 gezeigten Pfeils 44, so trifft es nach einem Passieren des Anschlussstutzens 18 auf die Prallplatte 20. Der Fluidstrom wird an der Prallscheibe 20 von der Axialrichtung in die Radialrichtung umgelenkt. Das Fluid strömt nachfolgend weiter in Axialrichtung an der Außenseite des Filterbauteils 28 entlang und muss erneut seine Strömungsrichtung ändern, um radial nach innen durch das Filtergewebe 26 durchtreten zu können. Mit diesen Umlenkungen werden Partikel im Fluidstrom durch entstehende Wirbelströme verwirbelt. Es wird so vermieden, dass sich gerade langgestreckte Partikel im Fluidstrom in Strömungsrichtung ausrichten können. Diese länglichen Partikel würden dann auf die zugehörigen Filterflächen senkrecht auftreffen und trotz ihrer Größe (bzw. Länge) durch den Filter hindurchtreten. Durch die Verwirbelung wird derartiges Ausrichten in Strömungsrichtung hingegen verhindert und dadurch eine maximale Filterwirkung erreicht.

Der Kraftstoff fließt also entlang der Prallplatte 20 und schließlich zwischen das Gehäuse 12 und den Einsatz 22. Ein dort zwischen Gehäuse 12 und Einsatz 22 umlaufender Spalt 45 ist zwar schmal, stellt aber aufgrund des großen Umfangs des Einsatzes dennoch einen großen Strömungsquerschnitt und damit einen kleinen Strömungswiderstand bereit. Der Kraftstoff wird mit hydraulischem Druck durch das Filtergewebe 26 gedrückt und dabei von Partikeln befreit. Der hydraulische Druck des Kraftstoffstroms übt auf einen Teil der Fläche des kugelförmigen Schließkörper 32 eine Kraft in Richtung des Pfeils 44 aus. Diese Kraft verschiebt den Schließkörper 32 entgegen der Federkraft der Schraubenfeder 34. Der vorher durch den Schließkörper 32 verschlossene Ventilsitz 30 ist somit passierbar und der Kraftstoff verlässt das Rückschlagventil 10 durch den Anschlußstutzen 16. Das Filtergewebe 26 ist dabei dem Schließkörper 32 zugeordnet und schützt insbesondere diesen vor Verunreinigungen.

Der hydraulische Druck, der ein Verschieben des Schließkörpers 32 bewirkt, übt zugleich eine Kraft auf die Fläche des ringförmigen Schließkörpers 40 aus. Diese Kraft wirkt in Richtung des Pfeils 44 und der Federkraft der Schraubenfeder 42. Durch die Addition beider Kräfte wird eine Dichtfunktion des Schließkörpers 40 hydraulisch unterstützt.

Wird das Rückschlagventil 10 zum Befüllen in Richtung eines in Fig. 2 dargestellten Pfeils 46 von rechts nach links von Fluid angeströmt bzw. durchströmt, so gelangt der Kraftstoff nach einem Passieren des Anschlussstutzens 16 in die Kanäle 38. Dort strömt der Kraftstoff durch das Filtergewebe 39 und wird ebenfalls von Partikeln befreit. Der hydraulische Druck hebt den ringförmigen Schließkörper 40 vom Ventilsitz 36 ab. Der Schließkörper 40 bewegt sich entgegen der Federkraft der Schraubenfeder 42 und lässt ein Weiterströmen des Kraftstoffs ins Innere des Einsatzes 22 zu. Das Filtergewebe 39 ist dabei dem Schließkörper 40 zugeordnet und schützt insbesondere diesen vor Verunreinigungen.

Zugleich unterstützt der hydraulische Druck in Richtung des Pfeils 46 die Dichtfunktion des Schließkörpers 32 am Ventilsitz 30.

Der Kraftstoff strömt nun in Richtung des Filterbauteils 28, wobei die Strömung durch den ringförmigen Schließkörper 40 umgelenkt wird. Durch die Umlenkung der Strömung entstehen Verwirbelungen die ebenfalls die Filtrationswirkung des Filterbauteils 28 optimieren. Nach einem Passieren des Filtergewebes 26 fließt der Kraftstoff zwischen dem Gehäuse 12 und dem Einsatz 22 durch den Spalt 45 in Richtung des Deckels 14 und verlässt das Rückschlagventil 10 durch den Anschlussstutzen 18.

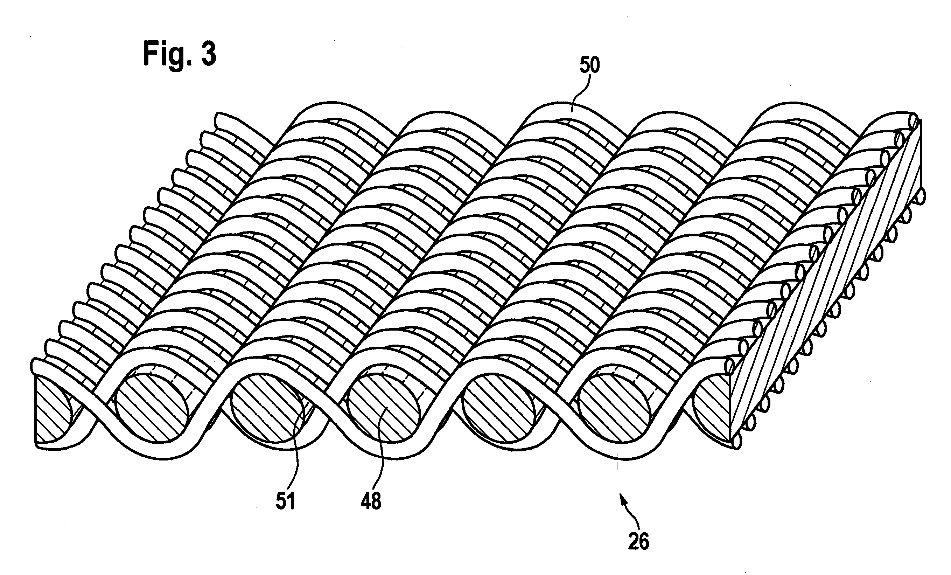

Fig. 3 zeigt das Filtergewebe 26 oder 39 im Detail. Es umfasst Kettfäden 48 und Schussfäden 50. Die Kettfäden 48 weisen einen erheblich größeren Durchmesser als die Schussfäden 50 auf. Dadurch ergibt sich an dem Filtergewebe 26 am einzelnen Kettfaden 48 zwischen zwei benachbarten Schussfäden 50 je Filtermasche eine (im wesentlichen) dreieckförmige Maschenöffnung 51. Diese Maschenöffnungen 51 weisen zur Querschnittsfläche der Kettfäden 48 einen Winkel im Bereich von 30° bis 60°, vorliegend von 45° auf. Innerhalb des Gewebes wird so die zu durchströmende Filterfläche in eine dreidimensionale Form (einen "3D-Filter") gelegt. Die schräge Ausrichtung der Maschenöffnungen 51 führt zu einer zusätzlichen Strömungsumlenkung, wodurch ebenfalls lange, dünne Partikel besser abgefangen werden.

Die Filtergewebe 26 und 39 sind in einem Arbeitsgang durch Umspritzen in dem im übrigen aus Kunststoff hergestellten Einsatz 22 als Filterbauteil 28 integriert worden. Dabei sind das Filtergebewebe 26 und das Filtergewebe 39 entweder einstückig als ein becherförmiges Filterelement oder wie vorliegend als zwei einzelne Filterelemente, von denen eines scheibenförmig und das andere hohlzylindrisch ist, vorgefertigt worden.

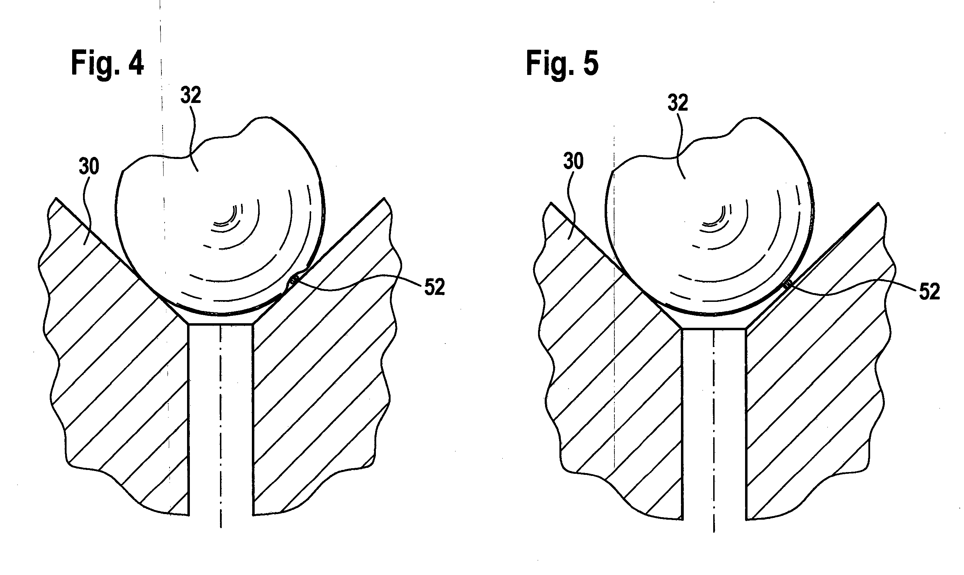

Fig. 4 zeigt im Detail den Ventilsitz 30, der vorliegend aus einem mit Aramidfasern verstärkten Kunststoff gestaltet ist, und den zugehörigen Schließkörper 32. Auf dem Ventilsitz 30 hat sich ein Partikel 52 abgesetzt. Der Schließkörper 32 ist aus Elastomer-Werkstoff hergestellt. Er ist daher gut elastisch verformbar und kann sich über den Partikel 52 hinweg verformen. Er dichtet daher trotz des Partikels 52 am Ventilsitz 30 ab. Allgemein kann sich der Schließkörper 32 aufgrund seiner elastischen Verformbarkeit besonders gut an unterschiedliche Oberflächenstrukturen anpassen und dadurch Abweichungen an der Oberfläche des zugehörigen Ventilsitzes 30 ausgleichen.

In Fig. 5 ist im Vergleich dazu die Situation gemäß Fig. 4 bei einem Schließkörper 32 zu sehen, der aus einem Stahl-Werkstoff hergestellt ist. Dieser Schließkörper weist nicht die oben genannten elastischen Eigenschaften auf. Er liegt daher so auf dem Partikel 52 auf, dass ein sichelförmiger Spalt entsteht. Durch diesen Spalt kann Kraftstoff fließen.

Fig. 6 zeigt das Kraftstoffeinspritzsystem, in dem das Rückschlagventil 10 eingebaut ist. Das Kraftstoffeinspritzsystem gehört zu einem Motor 54, dem über ein Druckbegrenzungsventil 56 mittels einer Einspritzpumpe 58 flüssiger Kraftstoff zugeführt werden kann. Der Kraftstoff wird dabei zu Zylindern 60 gefördert, an denen er eingespritzt und verbrannt wird. Bei der Einspritzung überschüssiger Kraftstoff gelangt in eine Rücklaufleitung 62.

Zu dem Druckregelventil 56 gelangt der Kraftstoff durch einen druckfesten Filter 64, wobei ein Motorsteuergerät 66 vorgesehen ist, welche diese Kraftstoffzufuhr steuert. Das Motorsteuergerät 66 ist ferner mit einem Tankpumpensteuergerät 68 betrieblich gekoppelt.

In einem Tank 70 wird der Kraftstoff bevorratet, wobei am Tank als Sicherheitsventil ein Druckbegrenzungsventil 72 vorgesehen ist. Aus dem Tank 70 wird der Kraftstoff mittels einer Tankpumpe 74 herausgefördert. Die Tankpumpe 74 fördert den Kraftstoff mit Druck (Mitteldruck bis zu ca. 6 bar) zum druckfesten Filter 64, wobei diese Kraftstoffförderung mittels des Tankpumpensteuergeräts 68 gesteuert wird. Der druckfeste Filter 64 befreit den Kraftstoff von Verunreinigungen.

In Strömungsrichtung hinter dem druckfesten Filter 64 ist in der zugehörigen Leitung ein Kraftstoffkühler mit Temperatursensor 76 angeordnet. Durch diesen Kraftstoffkühler wird der Kraftstoff zum Druckbegrenzungsventil 56 gefördert. Von diesem gelangt der Kraftstoff entweder zu den Zylindern 60, durch eine Ringleitung zurück vor den druckfesten Filter 64 oder zurück in den Tank 70.

Das Beströmen der Zylinder 60 wird mittels der Einspritzpumpe 58 im Hochdruckbereich (deutlich über 6 bar) durchgeführt und dient zum Verbrennen des Kraftstoffs sowie zum eigentlichen Betreiben des Motors 54. In den Zylindern 60 wird chemische Energie des Kraftstoffs durch Verbrennung in mechanische Arbeit umgewandelt.

Das Rückströmen nach vorne, in Strömungsrichtung vor den druckfesten Filter 64 dient zum Kühlen des Kraftstoffs (bei Mitteldruck). Dabei wird die an den Pumpen 58 und 74 vom Kraftstoff aufgenommene Wärmeenergie wieder abgeführt. Der Temperatursensor 76 meldet die Temperatur des Kraftstoffstroms an das Motorsteuergerät 66. Das Motorsteuergerät 66 steuert über das Tankpumpensteuergerät 68 den Kraftstoffstrom zum druckfesten Filter 64. Dadurch wird die dem Kraftstoffstrom entzogene Menge an Wärmeenergie reguliert.

Das Rückströmen in den Tank 70 dient zum Abführen von überschüssigem Kraftstoff und erfolgt bei Niederdruck (unter ca. 1,8 bar).

Der Kraftstoff, der zu den Zylindern 60 gelangt, wird dort größtenteils eingespritzt. Das Druckregelventil 56 gleicht Druckschwankungen an seiner Eingangsseite aus, so dass an seiner Ausgangsseite ein konstanter Ausgangsdruck herrscht. Die Einspritzung an den Zylindern 60 basiert dann mit Hilfe der Hochdruck erzeugenden Einspritzpumpe 58 nachfolgend zusätzlich auf einer Überdruckregelung, von der der überschüssige Kraftstoff direkt zum Druckbegrenzungsventil 56 zurückgefördert wird.

Dabei fördert die Einspritzpumpe 58 zu Beginn ihrer Förderung einen Überschuss, der durch das Rückschlagventil 10 in den Tank 70 zurückgeführt wird. Das Rückführen des überschüssigen Kraftstoffs erfolgt in Richtung des Pfeils 44 in Fig. 2.

In der Startphase des Motors 54 ist das bereits erwähnte Befüllen des Motorsystems bzw. das Bereitstellen von Gegendruck hinter den Zylindern 60 notwendig. Dieses Befüllen mit Kraftstoff erfolgt ebenfalls durch die Einspritzpumpe 58. Dazu drückt die Einspritzpumpe 58 gemäß Fig. 2 den Kraftstoff in Richtung des Pfeils 46 durch das Rückschlagventil 10.

## Patentansprüche

1. Rückschlagventil (10) mit einem ersten Ventil, das durch einen ersten Schließkörper (32) und einem zugehörigen ersten Ventilsitz (30) gebildet ist, und einem zweiten Ventil, das durch einen zweiten Schließkörper (40) und einen zugehörigen zweiten Ventilsitz (36) gebildet ist, wobei der erste und der zweite Ventilsitz (30; 36) an einem gemeinsamen Ventilsitzbauteil (22) ausgebildet sind, und der zweite Ventilsitz (36) den ersten Ventilsitz (30) außen umgebend gestaltet ist, wobei eine parallele Anordnung von Ventilen geschaffen ist, die räumlich ineinander geschaltet sind, **dadurch gekennzeichnet, dass** das erste Ventil in entgegengesetzter Richtung zum zweiten Ventil schließt bzw. öffnet.

2. Rückschlagventil nach Anspruch 1,
**dadurch gekennzeichnet, dass** der erste Ventilsitz (30) als eine zentrale Öffnung und der zweite Ventilsitz (36) mit mehreren Öffnungen (38) gestaltet ist, welche radial außen umfänglich um den ersten Ventilsitz herum angeordnet sind.

3. Rückschlagventil nach Anspruch 1 oder 2,
**dadurch gekennzeichnet, dass** der zweite Schließkörper (40) ringförmig gestaltet ist.

4. Rückschlagventil nach einem der Ansprüche 1 bis 3,
**dadurch gekennzeichnet, dass** der erste Schließkörper (32) mit einem ersten Federelement (34) und der zweite Schließkörper (40) mit einem zweiten Federelement (42) in einer axialen Richtung gegen die zugehörigen Ventilsitze (30; 36) gedrängt sind, und die Federelemente (34; 42) sich in dieser axialen Richtung überlappend gestaltet sind.

5. Rückschlagventil nach einem der Ansprüche 1 bis 4,
**dadurch gekennzeichnet, dass** zwei Filterelemente (26, 39) vorgesehen sind, welche strömungstechnisch mit dem ersten bzw. dem zweiten Ventilsitz (30; 36) in Reihe geschaltet sind.

6. Rückschlagventil (10) nach einem der Ansprüche 1 bis 5, mit einem ersten Schließkörper (32) und einem zugeordneten ersten Filtergewebe (26) sowie einem zweiten Schließkörper (40) und einem zugeordneten zweiten Filtergewebe (39),
**dadurch gekennzeichnet, dass** das erste und das zweite Filtergewebe (26; 39) in einem gemeinsamen Filterbauteil (28) umspritzt sind.

7. Rückschlagventil nach Anspruch 6,
**dadurch gekennzeichnet, dass** das Filterbauteil (28) mit einer hohlzylindrischen Filterpatrone gestaltet ist.

8. Rückschlagventil nach Anspruch 6 oder 7,
**dadurch gekennzeichnet, dass** die Filtergewebe (26, 39) des Filterbauteils (28) mit einem aus zwei Fäden (48; 50) gewebten Geflecht gestaltet sind, von denen ein Faden einen größeren Durchmesser aufweist, als der andere.

9. Rückschlagventil nach einem der Ansprüche 6 bis 8,
**dadurch gekennzeichnet, dass** das Ventilsitzbauteil (22) zugleich die Filtergewebe (26, 39) haltert.

10. Rückschlagventil (10) nach einem der Ansprüche 1 bis 9,
**dadurch gekennzeichnet, dass** mindestens ein Ventilsitz (30; 36) aus einem mit Aramidfasern verstärkten Kunststoff gestaltet ist.

11. Rückschlagventil (10) nach einem der Ansprüche 1 bis 10,
**dadurch gekennzeichnet, dass** zwei Bauteile mittels eines materialaufschmelzenden Verfahrens miteinander verbunden sind, von denen das erste Bauteil mit einem ersten Füllstoff, insbesondere Aramidfasern, und das zweite Bauteil mit einem zweiten, andersartigen Füllstoff, insbesondere Glasfasern, gestaltet ist.

12. Kraftstoffeinspritzsystem mit einem Rückschlagventil gemäß einem der Ansprüche 1 bis 11.

## Claims

1. Check valve (10) having a first valve which is formed by a first closing body (32) and an associated first valve seat (30), and having a second valve which is formed by a second closing body (40) and an associated second valve seat (36), wherein the first and the second valve seat (30; 36) are formed on a common valve seat component (22), and the second valve seat (36) is configured so as to surround the first valve seat (30) at the outside, wherein a parallel arrangement of valves is created, said valves being nested spatially one inside the other, **characterized in that** the first valve closes and opens in the opposite direction to the second valve.

2. Check valve according to Claim 1,
**characterized in that** the first valve seat (30) is configured as a central opening, and the second valve seat (36) is configured with multiple openings (38) which are arranged radially at the outside around the circumference of the first valve seat.

3. Check valve according to Claim 1 or 2,
**characterized in that** the second closing body (40) is of annular configuration.

4. Check valve according to one of Claims 1 to 3,
**characterized in that** the first closing body (32) is forced by a first spring element (34), and the second closing body (40) is forced by a second spring element (42), in an axial direction against the associated valve seat (30; 36), and the spring elements (34; 42) are configured so as to overlap in said axial direction.

5. Check valve according to one of Claims 1 to 4,
**characterized in that** two filter elements (26, 39) are provided which are connected in series with respect to the first and the second valve seat (30; 36) in terms of flow.

6. Check valve (10) according to one of Claims 1 to 5, having a first closing body (32) and an associated first filter fabric (26), and having a second closing body (40) and an associated second filter fabric (39), **characterized in that** the first and the second filter fabric (26; 39) are insert-moulded in a common filter component (28).

7. Check valve according to Claim 6,
**characterized in that** the filter component (28) is configured with a hollow cylindrical filter cartridge.

8. Check valve according Claim 6 or 7,
**characterized in that** the filter fabrics (26, 39) of the filter component (28) are configured with a mesh woven from two threads (48; 50), of which one thread has a greater diameter than the other.

9. Check valve according to one of Claims 6 to 8,
**characterized in that** the valve seat component (22) simultaneously retains the filter fabrics (26, 39).

10. Check valve (10) according to one of Claims 1 to 9,
**characterized in that** at least one valve seat (30; 36) is formed from a plastic reinforced with aramide fibres.

11. Check valve (10) according to one of Claims 1 to 10, **characterized in that** two components are connected to one another by means of a material-melting method, of which the first component is formed with a first filler material, in particular aramide fibres, and the second component is formed with a second, different filler material, in particular glass fibres.

12. Fuel injection system having a check valve according to one of Claims 1 to 11.

## Revendications

1. Clapet anti-retour (10) comprenant une première soupape, qui est formée par un premier corps de fermeture (32) et un premier siège de soupape associé (30), et une deuxième soupape, qui est formée par un deuxième corps de fermeture (40) et un deuxième siège de soupape associé (36), le premier et le deuxième siège de soupape (30 ; 36) étant réalisés sur un composant de siège de soupape commun (22), et le deuxième siège de soupape (36) étant configuré de manière à entourer à l'extérieur le premier siège de soupape (30), un agencement parallèle de soupapes étant produit, lesquelles soupapes sont connectées spatialement l'une dans l'autre, **caractérisé en ce que** la première soupape s'ouvre ou se ferme en sens contraires à la deuxième soupape.

2. Clapet anti-retour selon la revendication 1,
**caractérisé en ce que** le premier siège de soupape (30) est configuré en tant qu'ouverture centrale et le deuxième siège de soupape (36) est configuré de manière à présenter plusieurs ouvertures (38) qui sont disposées de manière périphérique radialement à l'extérieur autour du premier siège de soupape.

3. Clapet anti-retour selon la revendication 1 ou 2, **caractérisé en ce que** le deuxième corps de fermeture (40) est configuré de manière annulaire.

4. Clapet anti-retour selon l'une quelconque des revendications 1 à 3,
**caractérisé en ce que** le premier corps de fermeture (32) est poussé à l'aide d'un premier élément ressort (34) dans une direction axiale contre le siège de soupape associé (30) et le deuxième corps de fermeture (40) est poussé à l'aide d'un deuxième élément ressort (42) dans une direction axiale contre le siège de soupape associé (36), et les éléments ressort (34 ; 42) sont configurés en chevauchement dans cette direction axiale.

5. Clapet anti-retour selon l'une quelconque des revendications 1 à 4,
**caractérisé en ce que** deux éléments filtrants (26, 39) sont prévus, lesquels sont en liaison fluidique en série avec le premier ou le deuxième siège de soupape (30 ; 36).

6. Clapet anti-retour (10) selon l'une quelconque des revendications 1 à 5, comprenant un premier corps de fermeture (32) et un premier tissu filtrant associé (26) ainsi qu'un deuxième corps de fermeture (40) et un deuxième tissu filtrant associé (39),
**caractérisé en ce que** le premier et le deuxième tissu filtrant (26 ; 39) sont surmoulés dans un composant filtrant commun (28).

7. Clapet anti-retour selon la revendication 6,
**caractérisé en ce que** le composant filtrant (28) est configuré avec une cartouche filtrante cylindrique creuse.

8. Clapet anti-retour selon la revendication 6 ou 7, **caractérisé en ce que** les tissus filtrants (26, 39) du composant filtrant (28) sont configurés avec un filet tissé à partir de deux fils (48 ; 50) parmi lesquels un fil présente un plus grand diamètre que l'autre.

9. Clapet anti-retour selon l'une quelconque des revendications 6 à 8,
**caractérisé en ce que** le composant de siège de soupape (22) supporte en même temps les tissus filtrants (26, 39).

10. Clapet anti-retour (10) selon l'une quelconque des revendications 1 à 9,
**caractérisé en ce qu'**au moins un siège de soupape (30 ; 36) est configuré à partir d'un plastique renforcé par des fibres d'aramide.

11. Clapet anti-retour (10) selon l'une quelconque des revendications 1 à 10,
**caractérisé en ce que** deux composants sont reliés l'un à l'autre au moyen d'un procédé de fusion de matière, parmi lesquels le premier composant est configuré avec une première matière de charge, en particulier des fibres d'aramide, et le deuxième composant est configuré avec une deuxième matière de charge différente de la première, en particulier des fibres de verre.

12. Système d'injection de carburant comprenant un clapet anti-retour selon l'une quelconque des revendications 1 à 11.
